(19) Europäisches Patentamt

European Patent Office

Office européen des brevets

(11) Veröffentlichungsnummer: **0 487 498 B1**

(12) **EUROPÄISCHE PATENTSCHRIFT**

(45) Veröffentlichungstag der Patentschrift: **04.10.95**

(21) Anmeldenummer: **91890287.5**

(22) Anmeldetag: **18.11.91**

(51) Int. Cl.⁶: **G01N 9/00**

(54) **Vorrichtung zur Bestimmung der Dichte von Flüssigkeiten und Gasen aus der Periodendauer eines mit einem Präparat gefüllten Schwingers.**

(30) Priorität: **22.11.90 AT 2377/90**

(43) Veröffentlichungstag der Anmeldung:
**27.05.92 Patentblatt 92/22**

(45) Bekanntmachung des Hinweises auf die Patenterteilung:
**04.10.95 Patentblatt 95/40**

(84) Benannte Vertragsstaaten:
**AT BE CH DE DK ES FR GB GR IT LI LU NL SE**

(56) Entgegenhaltungen:
**WO-A-90/12306        AT-B- 356 943**
**DE-A- 1 498 548       FR-A- 2 208 525**
**GB-A- 2 187 286       US-A- 4 602 498**

(73) Patentinhaber: **Stabinger, Hans, Dr.**
**Peterstalstrasse 156**
**A-8042 Graz (AT)**

Patentinhaber: **Leopold, Hans, O. Univ.-Prof. Dr.**
**Sonnleitenweg 17**
**A-8043 Graz (AT)**

(72) Erfinder: **Stabinger, Hans, Dr.**
**Peterstalstrasse 156**
**A-8042 Graz (AT)**
Erfinder: **Leopold, Hans, O. Univ.-Prof. Dr.**
**Sonnleitenweg 17**
**A-8043 Graz (AT)**

(74) Vertreter: **Gibler, Ferdinand, Dipl.Ing. Dr. techn.**
**Dorotheergasse 7/14**
**A-1010 Wien (AT)**

**Beschreibung**

Die Erfindung bezieht sich auf eine Vorrichtung zur Bestimmung der Dichte von Flüssigkeiten und Gasen aus der Periodendauer eines mit einem Präparat gefüllten Schwingers, zu dessen Anregung ein Erregerverstärker vorgesehen ist, der den Schwinger in seiner mechanischen Resonanzfrequenz über elektromechanische Wandler anregt und der ein periodisches elektrisches Signal abgibt, das in seiner Periode mit der Periode des Schwingers oder einem Vielfachen davon übereinstimmt.

Eine solche Vorrichtung wurde z.B. durch AT-PS 356 943 bekannt. Bei dieser bekannten Vorrichtung bestehen die elektronischen Wandler aus Spulen und Permanentmagneten, die am Schwinger an Stellen großer Schwingungsweite angebracht sind. An diesen Stellen ist der Schwinger bezüglich Dichteänderungen des Präparates besonders empfindlich. Infolge des thermischen Ausdehnungskoeffizienten des Präparates sind diese Stellen auch besonders temperaturempfindlich. Die durch den Erregerstrom bedingte Eigenerwärmung der Spule(n) ist daher eine Fehlerquelle bei hochgenauen Dichtemessungen.

Vorrichtungen der eingangs genannten Art bei der die Schwinger an Stellen geringer Schwingungsweite angebracht sind, sind aus GB-A-2 187 286 bekannt. Die Wandler sind auch dort zwischen der Einspannstelle des Schwingers an der Gegenmasse und dem freien Ende des Schwingers angeordnet, aber direkt oberhalb der Einspannstelle am Fuß des Schwingers.

Aufgabe der Erfindung ist es, bei einer Vorrichtung der eingangs genannten Art die Genauigkeit der Dichtemessungen zu verbessern. Insbesondere soll die Messung temperaturunempfindlicher gemacht werden. Eine weitere Aufgabe der Erfindung besteht auch darin, eine Vorrichtung der eingangs genannten Art zu schaffen, welche die durch den Erregerstrom bedingte Eigenerwärmung der Spule(n) und die damit zusammenhängende Erwärmung der der Dichtemessung unterzogenen Probe vermeidet.

Erfindungsgemäß wird dies bei einer Vorrichtung der eingangs genannten Art dadurch erreicht, daß der bzw. die Wandler zwischen der Einspannstelle des Schwingers bzw. dem mit der Einspannstelle fest verbundenen Gehäuse des Schwingers und einer Gegenmasse angeordnet sind.

Der Schwinger, der vorzugsweise U-förmig ausgebildet ist und in dem die zu untersuchende Probe enthalten ist, ist in einem Gehäuse angeordnet. Das Gehäuse des Schwingers ist auf einem bzw. mehreren Wandlern abgestützt, der bzw. die ihrerseits auf einer Gegenmasse angeordnet sind, wobei der bzw. die Wandler elektrische Signale in mechanische Schwingungen umwandeln und z.B.

als Piezo-Elemente ausgeführt sein können.

Die Ansteuerung des bzw. der Wandler erfolgt dabei durch einen Erregerverstärker, der seinerseits über einen im Gehäuse des Schwingers angeordneten Aufnehmer gesteuert wird.

Durch die Anregung des Erregerverstärkers wird der Schwinger über den bzw. die Wandler in seiner mechanischen Resonanzfrequenz angeregt indem das Gehäuse des Schwingers relativ zur Gegenmasse bewegt wird.

Durch diese erfindungsgemäß erzielbare Relativbewegung vermeidet man in vorteilhafter und einfacher Weise die hierzu erforderliche direkte Anordnung der bzw. des Wandler(s) am Schwinger, wodurch ein unerwünschter Wärmefluß von dem bzw. den Wandler(n) zum Schwinger vermieden wird; darüberhinaus ist die Gegenmasse auch eine gute Wärmesenke für die Verlustleistung.

Durch diese erfindungsgemäßen Maßnahmen ist somit sichergestellt, daß die thermische Beeinflussung der im Schwinger enthaltenen Probe weitgehend herabgesetzt wird, wodurch sich die Genauigkeit der Messung erhöht.

Zur weiteren Herabsetzung der thermischen Beeinflussung kann nach einem weiteren Merkmal der Erfindung vorgesehen sein, daß Mittel zur thermischen Entkoppelung zwischen den Wandlern und dem Schwinger bzw. dessen Gehäuse angeordnet sind.

Bei diesen Mitteln zur thermischen Entkopplung kann es sich z.B. um eine Thermostatisierplatte, wie eine Kühlplatte handeln, deren Zweck es ist eine zusätzliche Wärmesenke zwischen dem bzw. den Wandler(n) und dem Gehäuse des Schwingers zu bilden.

Dadurch ergibt sich der Vorteil, daß keine Wärme als Verlustleistung des bzw. der Wandler auf den Schwinger übertragen wird und das Meßergebnis beeinflußt.

Auf diese Weise ist also ein Wärmefluß von dem bzw. den Wandler(n) zum Schwinger praktisch unterbunden.

Zur weiteren thermischen Entkopplung kann in Weiterbildung der Erfindung vorgesehen sein, daß der Schwinger bzw. dessen Gehäuse über Thermostatisierelemente, z.B. Peltierelemente, an der Thermostatisierplatte abgestützt ist.

Die konstruktive maßnahme der Thermostatisierplatte ist fakultativ. Eine Variante der Erfindung kann auch darin bestehen, daß die Wandler einerseits auf der Gegenmasse und andererseits unter Zwischenschaltung von Thermostatisierelementen, wie z.B. Peltierelementen, an dem Schwinger- bzw. dessen Gehäuse angeordnet sind.

Auch bei dieser Variante der Erfindung ergibt sich der Vorteil, daß ein sehr hohes Maß an Temperaturkonstanz der Probe sichergestellt ist, wobei eben durch diese Thermostatisierelemente eine weiter verbesserte thermische Entkopplung zwischen dem bzw. den Wandler(n) und dem Schwinger sichergestellt ist.

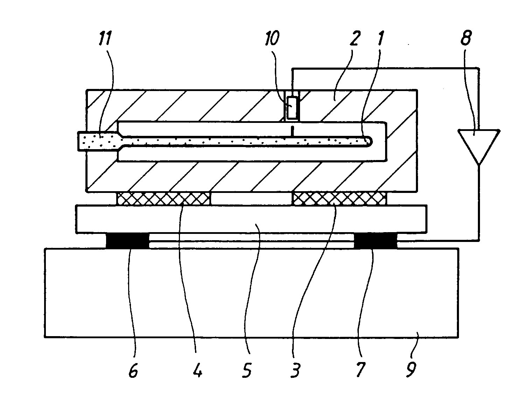

Die Erfindung wird nun anhand der Zeichnung näher erläutert, die schematisch eine erfindungsgemäße Vorrichtung zeigt.

Die Vorrichtung weist einen Schwinger 1 auf, der vorzugsweise U-förmig ausgebildet ist und in dem die zu untersuchende Probe enthalten ist. Dieser ist in einem Gehäuse 2 angeordnet.

Das Gehäuse 2 des Schwingers 1 ist über Thermostatisierelemente, die durch Peltierelemente 3, 4 gebildet sind, auf einer Thermostatisierplatte 5, z.B. einer Kühlplatte, angeordnet. Diese ist ihrerseits auf den Wandlern 6, 7 und diese wieder sind auf einer Gegenmasse 9 angeordnet.

Die Ansteuerung der Wandler 6, 7, die durch Piezoelemente gebildet sind, erfolgt durch einen Erregerverstärker 8, der seinerseits über einen im Gehäuse 2 des Schwingers 1 angeordneten Aufnehmer 10 gesteuert ist.

Die Dichtemessung beruht auf der Schwingermethode. Diese beruht auf der Bestimmung der Periodendauer $\tau$ eines Schwingungsgebildes, das so geformt ist, daß ein definiertes durch den Innenraum des Schwingers 1 gegebenes Volumen, des zu untersuchenden Präparates an der Schwingung teilnimmt und damit die Periodendauer $\tau$ beeinflußt. Die Periodendauer $\tau$ eines zur Dichtemessung verwendeten Schwingers 1, wird zum Zweck der Berechnung durch ein einfaches Masse-Feder-Modell ersetzt.

$$\tau = 2\pi \sqrt{\frac{M_o + \rho V}{c}}$$

Darin bedeuten $M_o$ die Masse des leeren Schwingers, c seine elastische Konstante und das Produkt $\rho V$ die an der Schwingung teilnehmende Präparatmasse, gegeben aus Präparatvolumen V und Dichte des Präparates. Die Quotienten $M_o/c$ und V/c können als schwingerspezifische Apparatekonstante betrachtet und aus der Bestimmung der Schwingungsdauer des mit zwei Eichpräparaten gefüllten Schwingers errechnet werden.

Nach Umformung und Definition zweckmäßigerer Konstanten A und $T_o$ erhält man:

$$\rho = \frac{1}{A} \cdot (T^2 - T_o^2)$$

Dabei ist T ein ganzzahliges Vielfaches der Periodendauer $\tau$, $T_o$ ein um denselben Faktor vermehrtes Vielfaches der Periodendauer $\tau_o$ des leeren Schwingers. Die Faktoren A und $T_o$ werden ermittelt, indem die letzte Gleichung für zwei Wertepaare $\rho$, T aufgestellt und nach den Faktoren A und $T_o$ gelöst werden.

Die zur Aufrechterhaltung der Schwingung erforderliche Energie wird dem Schwinger 1 über den Erregerverstärker 8 und die an diesen angeschlossenen Wandlern 6, 7 zugeführt.

Ausdrücklich sei festgehalten, daß die Erfindung auf die im Zusammenhang mit dem vorstehenden Ausführungsbeispiel beschriebene Thermostatisierplatte bzw. auf die Peltierelemente nicht beschränkt sind. Diese Maßnahmen dienen einer Verbesserung der angestrebten weitgehenden Herabsetzung des Temperatureinflußes, welch letzterer auch schon in sehr zufriedenstellendem Ausmaß dadurch erreicht werden kann, daß der bzw. die Wandler 6, 7 z.B. direkt an der Gegenmasse 9 angeordnet werden.

Eine Verbesserung der thermischen Entkopplung kann in diesem Zusammenhang nach der Erfindung auch dadurch erreicht werden, daß bei der vorstehenden Ausführungsform die Thermostatisierelemente 3 bzw 4, z.B. Peltierelemente unmittelbar zwischen jedem einzelnen der Wandler 6 bzw. 7 und dem Schwinger 1 bzw. dessen Gehäuse 2 angeordnet werden, also die Thermostatisierplatte weggelassen wird.

## Patentansprüche

1. Vorrichtung zur Bestimmung der Dichte von Flüssigkeiten und Gasen aus der Periodendauer eines mit einem Präparat gefüllten Schwingers, zu dessen Anregung ein Erregerverstärker vorgesehen ist, der den Schwinger in seiner mechanischen Resonanzfrequenz über Wandler anregt und der ein periodisches elektrisches Signal abgibt, das in seiner Periode mit der Periode des Schwingers oder einem Vielfachen davon übereinstimmt, **dadurch gekennzeichnet**, daß der bzw. die Wandler (6, 7) zwischen der Einspannstelle (11) des Schwingers (1) bzw. dem mit der Einspannstelle fest verbundenen Gehäuse (2) des Schwingers (1) und einer Gegenmasse (9), in der der Schwinger (1) nicht eingespannt ist, angeordnet sind, sodaß der Schwinger (1) ausschließlich durch die Bewegung der Einspannstelle (11) relativ zur Gegenmasse (9) angeregt wird und kein Erregungswandler direkt am Schwinger (1) angeordnet ist.

2. Vorrichtung nach Anspruch 1, **dadurch gekennzeichnet**, daß zwischen den Wandlern (6, 7) und dem Schwinger (1) bzw. dessen Gehäuse (2) Mittel zur thermischen Entkoppelung (5) angeordnet sind.

3. Vorrichtung nach Anspruch 2, **dadurch gekennzeichnet**, daß die Mittel zur thermischen Entkopplung eine Thermostatisierplatte (5) umfassen.

4. Vorrichtung nach Anspruch 3, **dadurch gekennzeichnet**, daß der Schwinger (1) bzw. dessen Gehäuse (2) über Thermostatisierelemente, z.B. Peltierelemente (3, 4), an der Thermostatisierplatte (5) abgestützt ist.

5. Vorrichtung nach Anspruch 2, **dadurch gekennzeichnet**, daß die Mittel zur thermischen Entkopplung durch zwischen den Wandlern (6, 7) und dem Schwinger (1) bzw. dessen Gehäuse (2) angeordnete Thermostatisierelemente, z.B. Peltierelemente (3, 4), gebildet sind.

## Claims

1. Device for determining the density of liquids and gases on the basis of the time period of a vibrator filled with a preparation, for the excitation of which vibrator an excitation amplifier is provided which excites the vibrator at its mechanical resonant frequency via transducers and which emits a periodic electrical signal, the period of which corresponds to the period of the vibrator or to a multiple thereof, characterized in that the transducer or transducers (6, 7) is or are arranged between the clamping point (11) of the vibrator (1) or the housing (2) of the vibrator (1), which housing is firmly connected to the clamping point, and a supporting mass (9) in which the vibrator (1) is not clamped, so that the vibrator (1) is excited relative to the supporting mass (9) exclusively by the movement of the clamping point (11) and no excitation transducer is arranged directly on the vibrator (1).

2. Device according to Claim 1, characterized in that thermal decoupling means (5) are arranged between the transducers (6, 7) and the vibrator (1) or its housing (2).

3. Device according to Claim 2, characterized in that the thermal decoupling means comprise a thermal-regulation plate (5).

4. Device according to Claim 3, characterized in that the vibrator (1) or its housing (2) is supported on the thermal-regulation plate (5) by means of thermal-regulation elements, for example Peltier elements (3, 4).

5. Device according to Claim 2, characterized in that the thermal decoupling means are formed by thermal-regulation elements, for example Peltier elements (3, 4), arranged between the transducers (6, 7) and the vibrator (1) or its housing (2).

## Revendications

1. Dispositif de détermination de la densité de liquides et de gaz à partir de la durée de période d'un oscillateur rempli d'une préparation, pour l'excitation duquel est prévu un amplificateur excitateur, qui excite l'oscillateur dans sa fréquence de résonance mécanique par l'intermédiaire de convertisseur et qui fournit un signal électrique périodique dont la période coïncide avec la période de l'oscillateur ou bien un multiple de celle-ci, caractérisé en ce que le ou les convertisseurs (6, 7) sont disposés entre le point d'action (11) de l'oscillateur (1) ou le boîtier (2), relié rigidement au point d'action, de l'oscillateur (1) et une contre-masse (9) dans laquelle l'oscillateur (1) n'est pas enserré, de sorte que l'oscillateur (1) est excité exclusivement par le mouvement du point d'action (11) par rapport à la contre-masse (9) et qu'aucun convertisseur d'excitation n'est directement disposé sur l'oscillateur (1).

2. Dispositif selon la revendication 1, caractérisé en ce que, entre les convertisseurs (6, 7) et l'oscillateur (1) ou son boîtier (2), sont disposés des moyens destinés au découplage thermique (5).

3. Dispositif selon la revendication 2, caractérisé en ce que les moyens de découplage thermiques comprennent une plaque de réglage thermostatique (5).

4. Dispositif selon la revendication 3, caractérisé en ce que l'oscillateur (1) ou son boîtier (2) sont soutenus sur la plaque de réglage thermostatique (5) par l'intermédiaire d'éléments à action thermostatique, par exemple d'éléments Peltier (3, 4).

5. Dispositif selon la revendication 2, caractérisé en ce que les moyens de découplage thermique sont constitués par des éléments thermostatiques, par exemple des éléments Peltier (3, 4) disposés entre les convertisseurs (6, 7) et l'oscillateur (1) ou son boîtier (2).